# EUROPÄISCHE PATENTSCHRIFT

(11) **EP 3 641 022 B1**
(45) Veröffentlichungstag und Bekanntmachung des Hinweises auf die Patenterteilung: **29.11.2023**
(21) Anmeldenummer: 19188598.7
(22) Anmeldetag: 26.07.2019
(51) Int. Cl.: H01M 4/04, H01M 4/1391, H01M 4/505, H01M 4/525, H01M 10/0525

(54) **VERFAHREN ZUR HERSTELLUNG EINER LITHIUMIONENZELLE**
METHOD FOR PRODUCING A LITHIUM ION CELL
PROCÉDÉ DE FABRICATION D'UN ÉLÉMENT LITHIUM-ION

(30) Priorität: 18.09.2018 DE 102018215808
(43) Veröffentlichungstag der Anmeldung: 22.04.2020
(73) Patentinhaber: Volkswagen AG, 38440 Wolfsburg (DE)
(72) Erfinder: Jochler, Enrica, 38547 Calberlah (Allerbüttel) (DE); Weber, Dominik Alexander, 38114 Braunschweig (DE)

(56) Entgegenhaltungen:
- WO-A1-2015/062985
- DE-A1-102014 222 664
- US-A1- 2013 330 615
- US-A1- 2016 218 356

## Beschreibung

Die Erfindung betrifft ein Verfahren mit den Merkmalen des Oberbegriffs des Patentanspruchs 1.

Bei der Herstellung einer Kathode und einer Anode wird das Material für die Anode und Kathode mit Additiven z.B. Bindern und Leitzusätzen zu einer dünnen Paste vermischt. Diese Paste wird im Englischen als "slurry" bezeichnet. Dann werden eine Aluminiumfolie für die Kathode und eine Kupferfolie für die Anode in eine Beschichtungsanlage gefördert, welche das Kathodenslurry und das Anodenslurry, nämlich das entsprechende Material auf die Folie aufbringt. Wenn die Folien nun beidseitig mit den Kathodenslurry bzw. Anodenslurry versehen sind und das Kathodenslurry bzw. Anodenslurry getrocknet sind, erfolgt das sogenannte Kalandern, also das Komprimieren des nun getrockneten Aktivmaterials auf den Folien. Dazu werden die beschichtenden Folien beispielsweise zwischen zwei Walzen komprimiert.

Aus der DE 10 2014 222 664 A1 ist ein Verfahren zur Herstellung der Kathode und/oder der Anode einer Lithium-Ionen-Zelle bekannt. Hierbei werden ein Aktivmaterial-Pulver, ein pulverförmiges elektrisches Leitadditiv und ein Elektrodenbindemittel unter Verwendung eines Trägerlösungsmittels zu einer Beschichtungsmasse vermischt. Die Beschichtungsmasse wird auf eine Stromableiterfolie aufgetragen, das Lösungsmittel wird entfernt. Ein Leitadditiv ist vor dem Vermischen einer Oberflächenoxidation unterworfen worden. Als Lösungsmittel kann dabei N-Methyl-2-Pyrrolidon, N-Methyl-2-Pyrrolidon oder Aceton oder Wasser verwendet werden. Als Bindemittel kann Polyvinylidenfluorid (PVDF) oder PVDF-Hexa-Fluorpropen (HFP) minus Copolymer verwendet werden. Hierbei wird ein pulvriger Binder (z.B. PVDF) im organischen Lösungsmittel gelöst. Die Binderlösung wird mit Kathodenaktivmaterial und Leitzusätzen z.B. Graphit oder Leitruß gemischt bis ein homogener Kathodenslurry entsteht. Mittels Rakel- oder Sprühverfahren wird der Slurry auf eine Trägerfolie, z.B. Aluminium aufgebracht und im Trockenofen z.B. 2 Stunden bei 120° Celsius getrocknet, bis die flüssigen Lösungsmittelbestandteile aus der Beschichtung entweichen. Die getrocknete Elektrode wird verdichtet und gegen eine entsprechende Anode zusammen mit einer Separationsschicht und einem Elektrolyten zu einer Lithium-Ionen-Batteriezelle gebaut.

Die Verwendung von solchen organischen Lösungsmitteln wie z.B. N-Methylpyrrolidon (NMP) ist nicht optimal. Nachteile dieses Verfahrens sind, dass das Lösungsmittel NMP fruchtschädigend und fruchtbarkeitsschädigend ist. Eine entsprechend maximale Arbeitsplatzkonzentration ist einzuhalten und es sind geeignete Atemschutzmaßnahmen bei der Prozessierung erforderlich. Darüber hinaus muss NMP aus dem heißen Trocknungsgas recycelt werden, wenn die nassen Elektroden getrocknet werden. Eine kostenintensive Lösemittelrückführungsanlage ist notwendig. NMP ist entflammbar, weshalb die Trocknungsanlage explosionsgeschützt sein muss.

Ziel ist es daher, ein alternatives Lösungsmittel zu finden, das nicht gesundheitsschädigend und in seiner Anschaffung sowie in der Anlagenauslegung günstig ist. Die Slurryherstellung auf Wasserbasis stellt eine mögliche Lösung dar.

Die Prozessierung eines Slurries mit Kathodenaktivmaterial, speziell nickelhaltigen Kathodenmaterial, insbesondere dem Kathodenaktivmaterial mit der Formel LiNixMnyCozO2 mit x = 0.33 ... 0.98, y = 0.01 ... 0.33, z = 0.01 ... 0.33 (kurz NMC) stellt jedoch eine Herausforderung dar. Der pH-Wert eines NMC-Slurries ist sehr hoch. Je nach Anteil von Nickel im Material liegt der pH-Wert zwischen 10 bei LiNi0.33CoMn0.33Co0.33O2 und 12,3 bei LiNi0.8Mn0.1Co0.1O2. Ein pH-Wert im alkalischen Bereich > 8,5 kann zu einer Korrosion des Aluminiumableiters führen, was eine Erhöhung des internen Widerstandes zur Folge hat. Ein Schutz des Aluminiumableiters gegenüber Korrosion infolge des alkalischen Milieus ist daher erforderlich.

Aus der US 5,518,839 A ist eine elektrochemische Zelle mit einem nickelbeschichteten Aluminiumstromkollektor bekannt. Die elektrochemische Zelle ist als Feststoffbatterie ausgebildet. Der Elektrolyt ist durch ein Polymernetzwerk gebildet. Ein Stromkollektor weist eine geätzte Aluminiumfolie auf, die mit einer dünnen Beschichtung aus einem Metall, beispielsweise Nickel versehen ist, dass widerstandsfähiger gegen Korrosion ist als Aluminium. Die Aluminiumfolie wird durch galvanisches Plattieren mit der metallischen korrosionsbeständigen versehen. Alternativ kann ein polymerer Träger verwendet werden, um das Metall auf die Aluminiumschicht aufzutragen, gefolgt von der Entfernung des Polymers durch Verflüchtigung.

Aus der US 5,578,399 A ist ein Stromkollektor bekannt, der eine Aluminium oder Kupferfolie umfasst, die mit einer Schicht aus gehärtetem Polymer beschichtet ist, die für die Korrosionsbeständigkeit lochfrei ist. Auf die Aluminium- oder Kupferfolie wird eine gehärtete, leitfähige Polymerschicht aufgetragen. Zwischen der Anode und der Kathode ist ein Polymerelektrolyt angeordnet. Benachbart zu entweder der Anode oder Kathode ist auf einer dem polymeren Elektrolyten gegenüberliegende Seite ein Stromkollektor vorhanden, der eine Metallschicht aus Aluminium oder Kupfer aufweist. Auf einer Seite der Metallschicht gegenüber der Kathode oder der Anode ist die Beschichtung aus dem gehärteten Polymer in einer Menge aufgetragen, die wirksam ist, die Korrosion zwischen der Kathode oder der Anode oder der Metallschicht zu verhindern. Diese Polymerschicht ist leitfähig, Pin-Loch frei und haftet an der Metallschicht. Die Metallschicht wird mit mindestens einem Monomer oder Präpolymer beschichtet, das beim Härten ein Polymer bilden kann. Die polymere Beschichtung umfasst eine derartige Menge an leitfähigem Material, so dass die Beschichtung eine elektrische Leitfähigkeit von mindestens 1 S cm⁻¹ aufweist.

In der Veröffentlichung "Ambient-Air Stable Lithiated Anode for Rechargeable Li-Ion Batteries with High Energy Density" https://pubs.acs.org/doi/10.1021/acs.nanolett.6b03655 wird ein Aufbau beschrieben, bei dem eine Polymerschicht auf einer Lithiumschicht aufgetragen wird, die sich auf einer Kupferfolie befindet. Die Polymerschicht schützt das empfindliche Lithium gegen Sauerstoff und Feuchtigkeit und ist chemisch stabil gegenüber Aktivmaterialien. Die Aktivmaterialien (Graphit, SiOx) sind in einem Slurry dispergiert und werden auf das Polymerummantelte Lithium aufgetragen, um eine Elektrode herzustellen. In der fertigen Batteriezelle löst sich die Schutzschicht auf und das Lithium wird in die Struktur des Graphits oder des Siliciums eingelagert (LixSi oder LixC), wodurch eine Prälithiierung erzielt wird. Dieses Verfahren findet nur Anwendung für die Anodenseite einer Batteriezelle.

Der Erfindung liegt daher die Aufgabe zugrunde, dass Verfahren zu verbessern.

Diese der Erfindung zugrunde liegende Aufgabe wird nun durch ein Verfahren mit den Merkmalen des Patentanspruchs 1 gelöst.

Das Verfahren betrifft die Herstellung einer Lithium-Ionen-Zelle, wobei auf eine

Aluminiumfolie eine Polymerschicht aufgebracht wird, wobei auf die mit einer Polymerschicht (2) beschichtete Aluminiumfolie ein nickelhaltiges Kathodenslurry aufgebracht wird, wobei die Polymerschicht während dieser Elektrodenherstellung chemisch und mechanisch stabil ist, wobei das feuchte Kathodenslurry getrocknet wird, dadurch gekennzeichnet, dass für das Kathodenslurry (3) als Lösungsmittel Wasser verwendet wird, wobei die Polymerschicht (2) während der Formierung der Lithium-Ionen-Zelle, nämlich bei einem erstmaligen Durchlaufen einer Lade-Entladesequenz, aufgelöst wird. Es ist nun erfindungsgemäß besonders vorteilhaft, dass für das Kathodenslurry als Lösungsmittel Wasser verwendet wird. Die Verwendung von Wasser als Lösungsmittel bei der Kathoden-Slurryherstellung hat den Vorteil, dass die Kosten reduziert sind. Dies betrifft sowohl die Investitionskosten als auch die Betriebskosten. Explosionsgeschützte Anlagen zur Lösungsmittelrückführung entfallen, wenn keine organischen Lösungsmittel wie N-Methyl-2-Pyrrolidon verwendet werden. Wasser ist günstiger als N-Methyl-2-Pyrrolidon. Wasser ist umweltfreundlich und nicht gesundheitsschädigend im Vergleich zu N-Methyl-2-Pyrrolidon. Das Verfahren ist einfach durchzuführen, da die Polymerschicht während der Formierung der Lithium-Ionen-Batteriezelle aufgelöst wird. Formierung bezeichnet das erstmalige Durchlaufen einer Lade-Entladesequenz der Batterie und findet als Teil des Herstellungsprozesses werkseitig in speziellen Anlagen statt. Die Formierung findet nach der mechanischen Fertigung der Batterie statt.

Es ist nicht der Einsatz von weiteren Substanzen notwendig, wenn die Polymerschicht aufgrund der chemischen Instabilität gegenüber dem Elektrolyten der Batterie aufgelöst wird. Die Polymerschicht löst sich während der Erstladung der Lithium-lonen-Batteriezelle auf.

Als Elektrolyt kann eine wasserfreie Lösung verwendet werden, in welcher ein Lithiumsalz in einem organischen Lösungsmittelgemisch gelöst ist. Der Elektrolyt stellt den Lithiumionen-Transport zwischen den Elektroden her. Das Leitsalz kann in verschiedenen Konzentrationen vorliegen, z. B. 1 bis 5 mol. Beispiele für Leitsalze sind Lithiumhexafluorophosphat (LiPF6) und Lithiumtetrafluoroborat (LiBF4). Anforderungen an das Lösungsmittel sind ein gutes Lösevermögen, ein niedriger Schmelzpunkt, ein hoher Flammpunkt und ein hoher Siedepunkt. Ein Lösungsmittel allein erfüllt diese Anforderungen nicht, weshalb üblicherweise eine Mischung aus mindestens zwei Lösungsmitteln verwendet wird. Als Lösungsmittel kommen insbesondere Carbonate zum Einsatz. Als Elektrolyt kann insbesondere ein Elektrolyt zum Einsatz kommen, bei dem 1 mol LiPF6 in EC : DMC : DEC im Verhältnis 1 : 1 : 1 gelöst ist.

Insbesondere im Hinblick auf Anwendungen im Automobilbereich ist es vorteilhaft, dass das Kathodenslurry ein Kathodenaktivmaterial mit der Formel LiNixMnyCozO2 mit x = 0.33 ... 0.98, y = 0.01 ... 0.33, z = 0.01 ... 0.33 aufweist. Diese Kathodenaktivmaterialien haben sich im Automobilbereich bewährt. Die Lithium-Ionen-Zelle kann insbesondere als Teil einer Traktionsbatterie eines Kraftfahrzeugs verwendet werden.

Ein einfach durchzuführendes Verfahren ist dadurch gegeben, dass der Beschichtungsauftrag der Polymerschicht mittels eines Rakel- oder Düsenverfahrens einer flüssigen Paste erfolgt.

Ein weiteres Verfahren zum Auftragen einer gleichmäßigen und entsprechend dünnen Polymerschicht ist dadurch realisiert, dass der Beschichtungsauftrag der Polymerschicht mittels Spin Coating erzeugt wird. Spin-Coating kann auch als Rotationsbeschichtung bezeichnet werden. Eine flüssige Polymerlösung wird im Bereich einer Rotationsachse auf die Aluminiumfolie aufgebracht. Die Aluminiumfolie wird um die Rotationsachse gedreht. In Abhängigkeit von der Viskosität der Polymerlösung und der Drehgeschwindigkeit erfolgt die Ausbreitung der Polymerlösung auf der Aluminiumfolie.

Vorzugsweise ist der Beschichtungsauftrag derart ausgebildet, dass die Polymerschicht eine Dicke zwischen 1 nm und 50 µm aufweist. Hierbei ist zum einen Korrosionsschutz erzielt und zum anderen ist sichergestellt, dass die Polymerschicht sich während der Formierung der Zelle auflöst.

Bevorzugte Materialien für die Polymerschicht sind PMMA (Polymethylmethacrylat), PAA (Polyacrylsäure), PAMA (Polyacrylmethylacrylat) oder PPC (Polypropylencarbonat) aufweist.

Die physikalische Anhaftung der Beschichtung am Ableiter, nämlich hier an der Aluminiumfolie wird zudem durch einen Kalandrierschritt verstärkt, indem die trockene Kathodenbeschichtung und die Polymerschicht auf die Aluminiumfolie gepresst werden.

Es gibt nun eine Vielzahl von Möglichkeiten, das erfindungsgemäße Verfahren in vorteilhafter Art und Weise auszugestalten und weiterzubilden. Hierfür darf zunächst auf die dem Patentanspruch 1 nachgeordneten Patentansprüche verwiesen werden. Im Folgenden darf eine bevorzugte Ausgestaltung der Erfindung anhand der Zeichnung und der dazugehörigen Beschreibung näher erläutert werden. In der Zeichnung zeigt:
- Fig. 1: eine Elektrode einer Lithium-lonen-Batteriezelle vor einer Erstladung,
- Fig. 2: eine Schnittansicht einer Lithium-lonen-Batteriezelle vor einer Erstladung,
- Fig. 3: ein Schnitt durch die Batteriezelle nach einer Erstladung, wobei eine Polymerschicht aufgelöst worden ist.

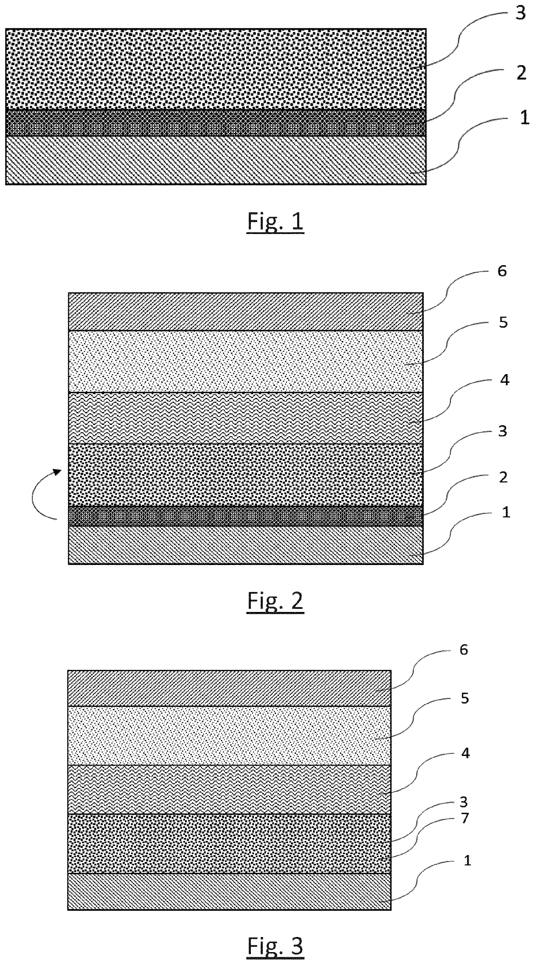

In Fig. 1 ist eine Elektrode einer Lithium-lonen-Zelle mit einer Aluminiumfolie 1 dargestellt, die mit einer Polymerschicht 2 beschichtet ist. Auf die Polymerschicht 2 ist ein Kathodenslurry 3 aufgebracht und getrocknet worden. Der Beschichtungsauftrag kann mittels eines Rakel- oder Düsenverfahrens einer flüssigen Paste erfolgen. Ferner kann eine Beschichtung mittels Spin Coating bzw. eines Rotationsbeschichtungverfahrens erzeugt werden. Die Polymerbeschichtung 2 kann wenige nm bis einige µm dick sein. Als Polymer kann PMMA (Polymethylmethacrylat), PAA (Polyacrylsäure), PAMA (Polyacrylmethylacrylat) oder PPC (Polypropylencarbonat) verwendet werden.

Auf die beschichtete Aluminiumfolie 1 wird ein nickelhaltiges Kathodenslurry 3 aufgebracht. Insbesondere kann dabei Kathodenaktivmaterial mit der Formel LiNixMnyCozO2 mit x = 0.33...0.98, y = 0.01...0.33, z = 0.01...0.33 auf Wasserbasis aufgebracht werden. Dieses Kathodenaktivmaterial wird im Folgenden kurz als NMC abgekürzt. Das Kathodenaktivmaterial verwendet ein Lösungsmittel auf Wasserbasis. Dieses Kathodenaktivmaterial auf Wasserbasis kann mittels eines Rakel- oder Düsenverfahrens aufgebracht werden. Diese Polymerbeschichtung 2 auf der Aluminiumfolie 1 schützt vor Korrosion der Aluminiumfolie 1 im alkalischen Slurrymilieu. Die Polymerschicht 2 weist eine Stabilität gegenüber einem pH-Wert von 11 von dem NMC Slurry 3 auf. Die feuchte Elektrode wird insbesondere in einem Trockenofen getrocknet, so dass die flüssigen Bestandteile, nämlich hier insbesondere das Wasser entweichen kann. Während dieses Verfahrensschritts der Elektrodenherstellung ist die Polymerschicht 2 stabil. Die Aluminiumfolie 1 dient als Ableiter. Die Aluminiumfolie 1, die Polymerschicht 2 und die Kathodenbeschichtung 3 bilden die Elektrode, nämlich die Kathode der Lithium-Ionen-Zelle.

In Fig. 2 und 3 sind nun eine entsprechende Lithium-lonen-Batteriezellen dargestellt. Hier sind mehrere Schichten dargestellt, nämlich zum einem die Aluminiumfolie 1, die Polymerschicht 2 (nur Fig.2), die Kathodenschicht 3, ein Elektrolyt 4, eine Anodenschicht 5 und eine Kupferfolie 6.

Während des Kontaktes mit dem Elektrolyt 4 bzw. während der Formierung löst sich nun die Polymerschicht 2 auf (vgl. Fig.3). Insbesondere wird während der Erstladung der Lithium-lonen-Batteriezelle die Polymerschicht 2 auf der Aluminiumfolie 1 aufgelöst. Die aufgelöste Polymerschicht 2 hat keinen negativen Einfluss auf die Haftung der Kathodenbeschichtung 3 auf die Aluminiumfolie 1. Die aufgelösten Polymerbestandteile 7 können sogar förderlich für die Anhaftung sein. Die physikalische Anhaftung der Beschichtung am Ableiter, nämlich hier an der Aluminiumfolie 1 wird zudem durch einen Kalandrierschritt verstärkt, indem die trockene Kathodenbeschichtung 3 und das Polymer 2 auf die Aluminiumfolie 1 gepresst werden.

Die Polymerbeschichtung 2 ist während der Elektrodenherstellung chemisch und mechanisch stabil. Die Polymerbeschichtung 2 löst sich in einer fertigen Lithium-Ionen-Batteriezelle auf. Nach der Auflösung der Polymerschicht 2 gehen die gelösten Polymerbestandteile 7 in der Kathodenbeschichtungsmatrix 3 auf. In Fig. 3 sind entsprechend gelöste Polymerbestandteile 7 in der Kathodenbeschichtung 3 vorhanden. Die Auflösung kann aufgrund der chemischen Instabilität gegenüber dem Elektrolyten 4 der Batterie erfolgen. Die Aluminiumfolie 1 ist vor Korrosion infolge des hohen pH-Wertes in einem wasserbasierten NMC-haltigen Slurry geschützt. Der NMC-haltige Slurry ist alkalisch. Die Verwendung von Wasser als Lösungsmittel zur Kathoden-Slurryherstellung erspart Kosten, nämlich sowohl Investitionskosten als auch Betriebskosten. Explosionsgeschützte Anlagen zur Lösemittelrückführung, wenn organische Lösungsmittel wie N-Methyl-2-Pyrrolidon verwendet werden, entfallen. Wasser ist günstiger als N-Methyl-2-Pyrrolidon. Wasser als Lösungsmittel ist umweltfreundlich und nicht gesundheitsschädigend im Vergleich zu N-Methyl-2-Pyrrolidon.

Das beschriebene Verfahren eignet sich sowohl für Lithium-Ionen-Batteriezellen, die in Kraftfahrzeugen eingesetzt werden, als auch im mobilen Bereich sowie im Consumerbereich.

### BEZUGSZEICHENLISTE

- 1: Aluminiumfolie
- 2: Polymerschicht
- 3: Kathodenbeschichtung/Kathodenslurry
- 4: Elektrolyt
- 5: Anodenbeschichtung
- 6: Kupferrolle
- 7: gelöste Polymerbestandteile

## Patentansprüche

1. Verfahren zur Herstellung einer Lithium-Ionen-Zelle, wobei auf eine Aluminiumfolie (1) eine Polymerschicht (2) aufgebracht wird, wobei auf die mit einer Polymerschicht (2) beschichtete Aluminiumfolie (1) ein nickelhaltiges Kathodenslurry (3) aufgebracht wird, wobei die Polymerschicht (2) während dieser Elektrodenherstellung chemisch und mechanisch stabil ist, wobei das feuchte Kathodenslurry (3) getrocknet wird, **dadurch gekennzeichnet, dass** für das Kathodenslurry (3) als Lösungsmittel Wasser verwendet wird, wobei die Polymerschicht (2) während der Formierung der Lithium-Ionen-Zelle, nämlich bei einem erstmaligen Durchlaufen einer Lade-Entladesequenz, aufgelöst wird.

2. Verfahren nach Anspruch 1, **dadurch gekennzeichnet, dass** die Polymerschicht (2) aufgrund der chemischen Instabilität gegenüber dem Elektrolyten (4) der Batterie aufgelöst wird.

3. Verfahren nach Anspruch 1 oder 2, **dadurch gekennzeichnet, dass** als Elektrolyt (4) eine wasserfreie Lösung verwendet wird, in welcher ein Lithiumsalz in einem organischen Lösungsmittelgemisch gelöst ist.

4. Verfahren nach einem der vorstehenden Ansprüche, **dadurch gekennzeichnet, dass** die Polymerschicht (2) während der Erstladung der Lithium-Ionen-Zelle aufgelöst wird.

5. Verfahren nach einem der vorstehenden Ansprüche, **dadurch gekennzeichnet, dass** das Kathodenslurry (3) ein Kathodenaktivmaterial mit der Formel LiNixMnyCozO2 mit x = 0.33 ... 0.98, y = 0.01 ... 0.33, z = 0.01 ... 0.33 aufweist.

6. Verfahren nach einem der vorstehenden Ansprüche, **dadurch gekennzeichnet, dass** der Beschichtungsauftrag der Polymerschicht (2) mittels eines Rakel- oder Düsenverfahrens einer flüssigen Paste erfolgt.

7. Verfahren nach einem der vorstehenden Ansprüche, **dadurch gekennzeichnet, dass** der Beschichtungsauftrag der Polymerschicht (2) mittels Rotationsbeschichten (Spin Coating) erzeugt wird.

8. Verfahren nach einem der vorstehenden Ansprüche, **dadurch gekennzeichnet, dass** die Polymerschicht (2) eine Dicke zwischen 1 nm und 50 µm aufweist.

9. Verfahren nach einem der vorstehenden Ansprüche, **dadurch gekennzeichnet, dass** als Polymerschicht (2) PMMA (Polymethylmethacrylat), PAA (Polyacrylsäure), PAMA (Polyacrylmethylacrylat) oder PPC (Polypropylencarbonat) verwendet wird.

10. Verfahren nach einem der vorstehenden Ansprüche, **dadurch gekennzeichnet, dass** ein Kalandrierschritt durchgeführt wird, wobei die trockene Kathodenbeschichtung (3) und die Polymerschicht (2) auf die Aluminiumfolie (1) gepresst werden.

11. Verfahren nach einem der vorstehenden Ansprüche, **dadurch gekennzeichnet, dass** die Lithium-Ionen-Zelle in einer Traktionsbatterie eines Kraftfahrzeugs verwendet wird.

## Claims

1. Process for producing a lithium ion cell, where a polymer layer (2) is applied to an aluminium foil (1), where a nickel-containing cathode slurry (3) is applied to the aluminium foil (1) coated with a polymer layer (2), where the polymer layer (2) is chemically and mechanically stable during this electrode production, and where the moist cathode slurry (3) is dried, **characterized in that** the solvent used for the cathode slurry (3) is water, where the polymer layer (2) is dissolved during the forming of the lithium ion cell, namely in a first implementation of a charge-discharge sequence.

2. Process according to Claim 1, **characterized in that** the polymer layer (2) is dissolved on account of chemical instability towards the electrolyte (4) of the battery.

3. Process according to Claim 1 or 2, **characterized in that** the electrolyte (4) uses an anhydrous solution in which a lithium salt is dissolved in an organic solvent mixture.

4. Process according to any of the preceding claims, **characterized in that** the polymer layer (2) is dissolved during the first charge of the lithium ion cell.

5. Process according to any of the preceding claims, **characterized in that** the cathode slurry (3) includes a cathode active material having the formula LiNixMnyCozO2 with x = 0.33 ... 0.98, y = 0.01 ... 0.33, z = 0.01 ... 0.33.

6. Process according to any of the preceding claims, **characterized in that** the coating of the polymer layer (2) is applied by a method of knife-coating or nozzle application of a liquid paste.

7. Process according to any of the preceding claims, **characterized in that** the application of the coating of the polymer layer (2) is generated by spin-coating.

8. Process according to any of the preceding claims, **characterized in that** the polymer layer (2) has a thickness between 1 nm and 50 µm.

9. Process according to any of the preceding claims, **characterized in that** the polymer layer (2) used is PMMA (polymethylmethacrylate), PAA (polyacrylic acid), PAMA (polyacryloylmethylacrylate) or PPC (polypropylene carbonate).

10. Process according to any of the preceding claims, **characterized in that** a calendering step is conducted, where the dry cathode coating (3) and the polymer layer (2) are pressed onto the aluminium foil (1) .

11. Process according to any of the preceding claims, **characterized in that** the lithium ion cell is used in a traction battery of a motor vehicle.

## Revendications

1. Procédé de fabrication d'un élément lithium-ion, dans lequel on applique sur une feuille d'aluminium (1) une couche polymère (2), on applique sur la feuille d'aluminium (1) revêtue d'une couche polymère (2) une bouillie cathodique (3) contenant du nickel, la couche polymère (2) étant chimiquement et mécaniquement stable pendant cette fabrication de l'électrode, la bouillie cathodique humide (3) étant séchée, **caractérisé en ce qu'**on utilise pour la bouillie cathodique (3) de l'eau en tant que solvant, la couche polymère (2) étant, pendant la formation de l'élément lithium-ion, dissoute plus précisément lors de la première production d'une séquence charge-décharge.

2. Procédé selon la revendication 1, **caractérisé en ce que** la couche polymère (2) est dissoute en raison de l'instabilité chimique vis-à-vis de l'électrolyte (4) de la batterie.

3. Procédé selon la revendication 1 ou 2, **caractérisé en ce qu'**on utilise comme électrolyte (4) une solution anhydre dans laquelle un sel de lithium est dissous dans un mélange de solvants organiques.

4. Procédé selon l'une des revendications précédentes, **caractérisé en ce que** la couche polymère (2) est dissoute lors de la première charge de l'élément lithium-ion.

5. Procédé selon l'une des revendications précédentes, **caractérisé en ce que** la bouillie cathodique (3) présente une matière active de cathode de formule LiNixMnyCozO2, avec x = 0,33 ... 0,98, y = 0,01 ... 0,33, z = 0,01 ... 0,33.

6. Procédé selon l'une des revendications précédentes, **caractérisé en ce que** l'application du revêtement couche polymère (2) est réalisée par une application à la racle ou par buses d'une pâte liquide.

7. Procédé selon l'une des revendications précédentes, **caractérisé en ce que** l'application du revêtement couche polymère (2) est réalisée par enduction à la tournette (Spin Coating).

8. Procédé selon l'une des revendications précédentes, **caractérisé en ce que** la couche polymère (2) présente une épaisseur de 1 nm à 50 µm.

9. Procédé selon l'une des revendications précédentes, **caractérisé en ce qu'**on utilise comme couche polymère (2) du PMMA (poly(méthacrylate de méthyle)), du PAA (poly(acide acrylique)), du PAMA (poly(méthylacrylate d'acryle)) ou du PPC (poly(carbonate de propylène)).

10. Procédé selon l'une des revendications précédentes, **caractérisé en ce qu'**on procède à une étape de calandrage, dans laquelle le revêtement cathodique sec (3) et la couche polymère (2) sont pressés sur la feuille d'aluminium (1).

11. Procédé selon l'une des revendications précédentes, **caractérisé en ce que** l'élément lithium-ion est utilisé comme batterie de traction d'un véhicule à moteur.
